# EUROPÄISCHE PATENTSCHRIFT

(11) **EP 3 661 727 B1**
(45) Veröffentlichungstag und Bekanntmachung des Hinweises auf die Patenterteilung: **08.12.2021**
(21) Anmeldenummer: 18750172.1
(22) Anmeldetag: 02.08.2018
(51) Int. Cl.: B29C 49/48, B29C 49/06, B29C 49/36, B29C 49/46, B29L 31/00

(54) **VORRICHTUNG UND VERFAHREN ZUM BEDIENEN VON MEDIENKUPPLUNGEN AN EINER BLASFORM**
DEVICE AND METHOD FOR OPERATING MEDIA COUPLINGS ON A BLOW MOLD
DISPOSITIF ET PROCÉDÉ DESTINÉ À METTRE EN OEUVRE DES RACCORDS DE COUPLAGE SUR UN MOULE DE SOUFFLAGE.

(30) Priorität: 02.08.2017 DE 102017117533; 02.08.2017 DE 102017117576; 29.08.2017 DE 102017119817; 29.08.2017 DE 102017119816; 12.12.2017 DE 102017129576
(43) Veröffentlichungstag der Anmeldung: 10.06.2020
(73) Patentinhaber: Krones AG, 93073 Neutraubling (DE)
(72) Erfinder: HACK, Andreas, 93073 Neutraubling (DE); GELTINGER, Florian, 93073 Neutraubling (DE)
(74) Vertreter: Bittner, Bernhard
(86) Internationale Anmeldenummer: PCT/EP2018/071011
(87) Internationale Veröffentlichungsnummer: WO 2019/025552

(56) Entgegenhaltungen:
- EP-A2- 2 292 405
- WO-A1-2005/025835
- DE-A1-102014 105 762

## Beschreibung

Die vorliegende Erfindung bezieht sich auf eine Vorrichtung und ein Verfahren zur Umformung von Kunststoffvorformlingen zu Kunststoffbehältnissen. Vorrichtungen und Verfahren zum Umformen von Kunststoffvorformlingen sind aus dem Stand der Technik seit langem bekannt. Üblicherweise werden die Kunststoffvorformlinge hierzu in eine Blasform eingebracht, die eine Kavität ausbildet und in dessen Inneren die Kunststoffvorformlinge in einem Streckblasvorgang durch Beaufschlagung mit Druckluft gegen die Innenwandung dieser Blasform expandiert und gegebenenfalls zeitgleich mittels einer Reckstange gestreckt werden. Dabei hat es sich als vorteilhaft erwiesen, den Boden und die Seitenwände der Blasformen während des Streckblasvorgangs mit Kühl- oder Warmwasser, bei einigen Expansionsprozessarten auch individuell, zu temperieren. Je nach gewählter Expansionsprozessart ist ein exaktes Temperieren der Blasform zur Sicherstellung einer gleichbleibend hohen Qualität des erhaltenen Kunststoffbehältnisses erforderlich. Hierzu werden bei den verschiedenen Prozessarten (u.a. bei der Herstellung von Flaschen für eine nachfolgende Heißabfüllung) für die PET-Behälterherstellung die Blasformen über mehrere Anschlüsse und Kupplungen mit Medien versorgt. Bei einem manuellen Blasformwechsel werden die Blasformen manuell gewechselt und dabei die Anschlüsse manuell ab- und wieder angekuppelt. Einzig Blasformen für den Standardprozess können aktuell automatisiert mit einem Robotersystem gewechselt werden. Im Standardprozess wird die Bodenform über zwei Kupplungen mit dem Medium versorgt. Diese Kupplungen werden beim automatischen Blasformwechsel automatisch durch Anheben und Absenken des Bodens an- und abgekuppelt.

Aus dem Stand der Technik bekannte Vorrichtungen und Verfahren sind in den Patentschriften DE102014105762A1, EP2292405A2 oder DE102009039699A1, WO2005/025835A1 und US2015/0132430A1 beschrieben.

Aus den Vorrichtungen und Verfahren, die derzeit aus dem Stand der Technik bekannt sind ergibt sich der Nachteil, dass die Blasformen aufwendig per Hand abgekuppelt und wieder angekuppelt werden. Dies erfordert eine hohe Rüstzeit und somit eine lange Maschinenstillstandzeit.

Der vorliegenden Erfindung liegt die Aufgabe zugrunde, die aus dem Stand der Technik bekannten Nachteile zu überwinden und eine Vorrichtung zur Verfügung zu stellen, die eine während eines Blasformwechselvorgangs erforderliche Bedienung der Medienkupplungen weiter automatisiert und hierdurch insbesondere beschleunigt.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfads transportiert, wobei die Transporteinrichtung einen beweglichen und zumindest mittelbar an einem stationären Basisträger angeordneten Stationsträger aufweist, an dem eine Vielzahl von Umformungsstationen angeordnet ist, wobei diese Umformungsstationen jeweils Blasformeinrichtungen aufweisen, welche jeweils Hohlräume ausbilden bzw. welche jeweils einen Hohlraum ausbilden, innerhalb derer bzw. dem die Kunststoffvorformlinge zu den Kunststoffbehältnissen umformbar sind und diese Blasformeinrichtungen jeweils an Blasformträgern angeordnet sind, wobei die Vorrichtung eine Wechseleinrichtung aufweist, welche geeignet und dazu bestimmt ist, zumindest die Blasformeinrichtungen von deren Blasformträgern zu entfernen und/oder Blasformeinrichtungen an den Blasformträgern anzuordnen, wobei diese Wechseleinrichtung mindestens eine Greifeinrichtung zum Greifen der Blasformeinrichtung aufweist, wobei die Greifeinrichtung geeignet dazu ist, wahlweise eine vollständige Blasformeinrichtung oder nur Teile der Blasformeinrichtung zu wechseln, wobei die Umformungsstation und insbesondere die Blasformeinrichtung und/oder der Blasformträger wenigstens einen Kanal zum Führen eines fließfähigen Mediums sowie wenigstens eine von dem Kanal trennbare Kupplungseinrichtung aufweist.

Erfindungsgemäß ist die Wechseleinrichtung dazu geeignet und bestimmt, die Kupplungseinrichtung zu trennen und/oder zu verbinden (bzw. zu lösen und/oder zu schließen) und/oder eine Strömungsverbindung zwischen dem Kanal und der Kupplungseinrichtung zu trennen und/oder herzustellen. Bei der Kupplungseinrichtung kann es sich etwa um einen (trennbaren) Anschluss handeln, mittels dem an einen Kanal ein weiterer zum Führen eines fließfähigen Mediums geeigneter Kanal angeschlossen werden kann. Die Kupplungseinrichtung dient bevorzugt als Anschluss, über den ein Austausch und/oder eine Zufuhr und/oder eine Abfuhr an fließfähigem Medium in dem Kanal vorgenommen werden kann.

Es wird daher erfindungsgemäß vorgeschlagen, dass die Wechseleinrichtung nicht nur zum Wechsel bzw. zur Aufnahme von Blasformen bzw. Blasformeinrichtungen dient, sondern auch zum Lösen und/oder Schließen von Medienkupplungen an den Blasformen bzw. den Blasformeinrichtungen. An der Wechseleinrichtung, etwa einem Roboter(-greifer) oder einem Handhabungsmanipulator befindet sich damit bevorzugt eine Einrichtung, welche die Medienkupplungen bzw. die Kopplungseinrichtungen beim Greifen der Form automatisch löst und/oder verbindet.

Dies ist insbesondere dann vorteilhaft, wenn häufige Wechsel von Blasformen bzw. Blasformeinrichtungen vorgenommen werden müssen. Bei der Wechseleinrichtung handelt es sich bevorzugt um einen halbautomatischen und bevorzugt vollautomatischen Roboter. Es kann jedoch auch eine manuelle Wechseleinrichtung vorgesehen sein. So wäre es beispielsweise möglich, dass anstelle eines Roboters ein sogenannter Manipulator eingesetzt wird. Ein Manipulator kompensiert das Eigengewicht eines zu bewegenden Werkstücks, wie etwa einer Blasform, um die Bedienung zu erleichtern. Der Bediener kann den Manipulator, an dessen Ende der Formengreifer befestigt ist, führen. Ein derartiger Wechsel mittels eines Manipulators wird nicht automatisch durchgeführt bzw. ohne Bediener. Es wird darauf hingewiesen, dass die Ausgestaltung der Wechseleinrichtung als Manipulator auch unabhängig davon eingesetzt werden kann, ob die Wechseleinrichtung außerhalb des Wechselmodus noch andere Tätigkeiten durchführt.

Bevorzugt ist die Wechseleinrichtung entlang einem, insbesondere vorgegebenen, Bewegungspfad bzw. entlang einer Linie bewegbar bzw. führbar. Bevorzugt ist die Wechseleinrichtung, insbesondere auch wenn es sich um einen Roboter handelt, nicht mobil, sondern stationär angeordnet, wobei dessen Greifeinrichtung bzw. Roboterarm und/oder ein Element der Wechseleinrichtung, welches die Kupplungseinrichtung trennt und/oder verbindet, bewegbar, insbesondere auf wenigstens eine Umformungsstation hin zu- und wegbewegbar, ist. Möglich wäre auch, dass es sich bei der Wechseleinrichtung bevorzugt um ein mobiles Gerät handeln, welches bevorzugt in ihrer Gesamtheit bewegt werden kann, und es sich bevorzugt nicht um eine stationäre Einrichtung handelt. Bevorzugt ist die Wechseleinrichtung dazu geeignet und bestimmt, nicht nur die Kupplungseinrichtung(en) einer vorgegebenen Umformungsstation an der Vorrichtung zu bedienen (d.h. zu trennen oder zu verbinden), ist also nicht genau einer Umformungsstation zugeordnet, sondern dazu geeignet und/oder bestimmt, wenigstens auch die Kupplungseinrichtung(en) von wenigstens einer weiteren Umformungsstation und bevorzugt von allen Umformungsstationen der Vorrichtung zu bedienen. Denkbar ist aber auch, dass mehrere Wechseleinrichtungen vorgesehen sind, die etwa zeitgleich verschiedene Umformungsstationen bedienen. Dies bietet den Vorteil einer weiteren Zeitersparnis.

Bevorzugt wird die wenigstens eine Wechseleinrichtung in einem Wechselbetriebsmodus, in dem wenigstens eine Blasformeinrichtung gewechselt wird und der sich von einem Expansionsbetriebsmodus, in dem die Kunststoffvorformlinge zu Kunststoffbehältnissen expandiert werden, unterscheidet, eingesetzt. Bevorzugt ist der (Temperiermittel-)Kanal in einem Bodenteil und/oder in einem Seitenteil und/oder in den Seitenteilen der Blasformeinrichtung angeordnet. Bevorzugt sind mehrere (Temperiermittel-)Kanäle vorgesehen, so dass die einzelnen Teile der Blasformeinrichtung individuell mit fließfähigem Medium versorgt werden können. Dies bietet den Vorteil, dass etwa die einzelnen Teile separat temperiert werden können. Denkbar ist daher etwa, dass als Kanal wenigstens ein Temperiermittelkanal, bevorzugt ein Kühlmittelkanal, vorgesehen ist, der zum Leiten eines fließfähigen Temperiermittels zum Temperieren der Blasformeinrichtung und/oder der Blasformträgereinrichtung dient, wobei dieser Temperiermittelkanal bevorzugt in einen Temperierkreislauf eingebunden ist. Bevorzugt ist wenigstens ein erster Fluidkreislauf vorgesehen, um die Seitenwand zu temperieren, und wenigstens ein weiterer Fluidkreislauf, um den Boden zu temperieren. Bevorzugt weist das Bodenteil der Blasformeinrichtung wenigstens einen Kanal als Temperiermittelkanal auf, welcher besonders bevorzugt innerhalb des Bodenteils angeordnet ist. Bevorzugt ist dieser Temperiermittelkanal dazu geeignet und bestimmt, mittels Kühlflüssigkeit wie Kühlwasser das Bodenteil, insbesondere dessen dem Hohlraum zugewandte Oberfläche, zu kühlen, bevorzugt auf Temperaturen bis zu 20°C, bevorzugt bis zu 15°C und besonders bevorzugt bis zu 12°C, wobei bevorzugt die Temperaturen mindestens 5°C und besonders bevorzugt mindestens 8° betragen. Bevorzugt weist alternativ oder zusätzlich das Bodenteil der Blasformeinrichtung wenigstens einen Temperiermittelkanal auf, über den, etwa mittels Heizmedium wie Warmwasser das Bodenteil und insbesondere die dem Hohlraum zugewandte Oberfläche des Bodenteils erwärmbar ist, bevorzugt auf Temperaturen von mindestens 40°C, bevorzugt mindestens 50°C, bevorzugt mindestens 60°C, bevorzugt mindestens 70°C und besonders bevorzugt mindestens 80°C und/oder bevorzugt maximal 90°C und besonders bevorzugt maximal 85°C. Bevorzugt weist das Bodenteil wenigstens eine (von der Wechseleinrichtung trennbare und/oder herstellbare) Kupplungseinrichtung, über die der Temperiermittelkanal mit Kühlwasser versorgbar ist bzw. über die eine Strömungsverbindung mit Kühlwasser von entsprechend geeigneter Temperatur herstellbar ist, und/oder eine wenigstens eine (von der Wechseleinrichtung trennbare und/oder herstellbare) Kupplungseinrichtung auf, über die der Temperiermittelkanal mit Warmwasser versorgbar ist bzw. über die eine Strömungsverbindung mit Warmwasser von entsprechend geeigneter Temperatur herstellbar ist.

Bevorzugt weist wenigstens ein Seitenteil der Blasformeinrichtung und bevorzugt weisen jeweils beide Seitenteile der Blasformeinrichtung wenigstens einen Kanal als Temperiermittelkanal auf, welcher besonders bevorzugt innerhalb des Seitenteils angeordnet ist. Bevorzugt ist jeweils über diesen Temperiermittelkanal mittels Heizmedium wie Warmwasser das Seitenteil wenigstens abschnittsweise und insbesondere dessen dem Hohlraum zugwandte Oberfläche erwärmbar, bevorzugt auf Temperaturen von mindestens 40°C, bevorzugt mindestens 50°C, bevorzugt mindestens 60°C, bevorzugt mindestens 65°C, bevorzugt mindestens 70°C, bevorzugt mindestens 80°C und bevorzugt mindestens 85°C und/oder bevorzugt maximal 90°C, bevorzugt maximal 85°C, bevorzugt maximal 70° und besonders bevorzugt maximal 65°. Bevorzugt weist (jeweils) das Seitenteil eine (von der Wechseleinrichtung trennbare und/oder herstellbare) Kupplungseinrichtung auf, über die dieser Temperiermittelkanal mit Heizmedium wie Warmwasser versorgbar ist bzw. über die eine Strömungsverbindung zu Warmwasser mit entsprechender Temperatur herstellbar ist. Bevorzugt ist jeweils über diesen Temperiermittelkanal mittels Heizmedium wie Öl das Seitenteil wenigstens abschnittsweise und insbesondere dessen dem Hohlraum zugwandte Oberfläche erwärmbar, bevorzugt auf Temperaturen von mindestens 80°C, bevorzugt mindestens 90°C, bevorzugt mindestens 100°C, bevorzugt mindestens 120°C, bevorzugt mindestens 130°C, bevorzugt mindestens 140°C und bevorzugt mindestens 145°C und/oder bevorzugt maximal auf 160°C, bevorzugt maximal auf 155°C und besonders bevorzugt auf maximal 150°. Bevorzugt weist (jeweils) das Seitenteil eine (von der Wechseleinrichtung trennbare und/oder herstellbare) Kupplungseinrichtung auf, über die dieser Temperiermittelkanal mit Öl versorgbar ist bzw. über die eine Strömungsverbindung zu Öl mit entsprechender Temperatur herstellbar ist.

Bevorzugt weist der Blasformträger wenigstens einen Kanal als Temperiermittelkanal auf, welcher besonders bevorzugt innerhalb des Blasformträgers und/oder seitlich an dem Blasformträger angeordnet ist. Bevorzugt ist jeweils über diesen Temperiermittelkanal mittels Heizmedium wie Warmwasser der Blasformträger wenigstens abschnittsweise und insbesondere dessen (dem Hohlraum zugewandte) Oberfläche wenigstens abschnittsweise erwärmbar, bevorzugt auf Temperaturen von mindestens 30°C, bevorzugt mindestens 40°C, bevorzugt mindestens 50°C, bevorzugt mindestens 55°C und/oder bevorzugt maximal 75°C, bevorzugt maximal 70°C und besonders bevorzugt maximal 65°. Bevorzugt weist das Bodenteil eine (von der Wechseleinrichtung trennbare und/oder herstellbare) Kupplungseinrichtung auf, über die dieser Temperiermittelkanal mit Heizmedium wie Warmwasser versorgbar ist bzw. über die eine Strömungsverbindung zu Warmwasser mit entsprechender Temperatur herstellbar ist.

Bevorzugt ist der Temperiermittelkanal des Bodenteils und der Temperiermittelkanal wenigstens eines Seitenteils und bevorzugt die Temperiermittelkanäle beider Seitenteile wenigstens zeitweise gleichzeitig mit unterschiedlichem Temperiermittel bzw. mit Temperiermittel unterschiedlicher Temperatur beaufschlagbar. Dies bietet den Vorteil, dass das Bodenteil sowie die Seitenteile unterschiedlich und voneinander unabhängig temperiert werden können. Bevorzugt weisen das Bodenteil und die Seitenteile jeweils eigene bzw. separate Kupplungseinrichtungen auf, über die jeweils eine Strömungsverbindung zu Temperiermittel herstellbar und/oder trennbar ist.

Bevorzugt kann das Bodenteil zwei Kupplungseinrichtungen aufweisen, wobei besonders bevorzugt eine Kupplungseinrichtung zum Zuführen fließfähigen Mediums und die andere zum Abführen fließfähigen Mediums verwendet wird. Das Bodenteil kann aber auch mehr als zwei, bevorzugt wenigstens vier Kupplungseinrichtungen aufweisen. Vorteilhaft weist es verschiedene Kupplungseinrichtungen auf, über die beispielsweise sowohl Kühlwasser als auch Warmwasser zu- und abführbar ist. Denkbar ist, dass über die Kupplungseinrichtung auch eine Strömungsverbindung zwischen jeweils einem Kanal zwischen zwei verschiedenen Teilen einer Blasformeinrichtung herstellbar ist. Die Vorrichtung kann derart ausgebildet sein, dass die Bodenteile und die Seitenteile der Blasformeinrichtungen, bevorzugt gemeinsam und besonders bevorzugt individuell, mit fließfähigem Medium versorgt bzw. temperiert werden können. Alternativ oder zusätzlich kann die Vorrichtung auch derart ausgebildet sein, dass auch die Blasformträger jeweils individuell mit fließfähigem Medium versorgt bzw. temperiert werden können. Demzufolge kann wenigstens ein Seitenteil, bevorzugt können die Seitenteile, und/oder das Bodenteil und/oder die Blasformträger mindestens einen und bevorzugt wenigstens zwei (vorteilhaft genau zwei) Kupplungseinrichtungen aufweisen. Bevorzugt ist die Wechseleinrichtung derart ausgebildet, die Kupplungseinrichtungen mindestens zwei verschiedener Teile der Blasformeinrichtung zu bedienen, bevorzugt die Kupplungseinrichtung von einem Bodenteil und wenigstens einem Seitenteil und/oder wenigstens einem Blasformträger.

In einer vorteilhaften Ausführungsform ist die Wechseleinrichtung ein Wechselroboter oder ein Handhabungsmanipulator und der Wechselvorgang erfolgt bevorzugt automatisch oder halbautomatisch.

In einer vorteilhaften Ausführungsform weist die Umformungsstation wenigstens zwei und bevorzugt eine Vielzahl von Kupplungseinrichtungen auf und/oder die Wechseleinrichtung weist wenigstens zwei und bevorzugt eine Vielzahl von Schnittstellen zur Trennung und/oder Herstellung einer Strömungsverbindung auf. So kann etwa die Wechseleinrichtung mehrere Greifarme aufweisen oder aber einen Greifarm bzw. eine Greifeinrichtung mit mehreren Schnittstellen. Dabei sind die Schnittstellen bevorzugt derart ausgebildet, dass diese jeweils an eine Kupplungseinrichtung heranführbar sind und diese trennen und/oder verbinden können.

In einer weiteren vorteilhaften Ausführungsform weist die Umformungsstation wenigstens zwei Kupplungseinrichtungen auf, die auf im Wesentlichen voneinander verschiedenen Höhenebenen angeordnet sind. So können etwa die Medienkupplungen auf verschiedenen Höhenebenen angeordnet sein. Unter Höhenebene wird dabei eine (im Vergleich zur Bodenebene) der Vorrichtung horizontale Ebene verstanden. Mit anderen Worten weisen wenigstens zwei Kupplungseinrichtungen, die von der Wechseleinrichtung bedient werden können, im Betriebszustand der Vorrichtung einen voneinander verschiedenen vertikalen Abstand zum Boden auf. Die Wechseleinrichtung soll damit nicht nur etwa zwei zueinander symmetrische Kupplungseinrichtungen, von denen etwa eine auf dem einen Seitenteil und die andere auf dem zweiten, insbesondere dazu symmetrischen Seitenteil angeordnet ist, (gleichzeitig) bedienen können, sondern beispielsweise auch wenigstens eine Kupplungseinrichtung an einem Bodenteil der Vorrichtung und zusätzlich hierzu (wenigstens) eine Kupplungseinrichtung an einem Seitenteil und/oder an einem Blasformträger.

In einer weiteren vorteilhaften Ausführungsform weist die Umformungsstation wenigstens zwei Kupplungseinrichtungen auf, und die Wechseleinrichtung ist dazu geeignet und bestimmt, die beiden Kupplungseinrichtungen zeitlich nacheinander zu lösen und/oder zu verbinden. Dies kann den Vorteil bieten, dass an der Wechseleinrichtung weniger Schnittstellen zum gleichzeitigen Lösen der verschiedenen Kupplungseinrichtungen vorgesehen sein müssen. Dieselbe Schnittstelle kann also etwa die Kupplungseinrichtung an einem Bodenteil und einem Seitenteil und/oder einem Blasformträger bedienen.

In einer weiteren vorteilhaften Ausführungsform ist die Wechseleinrichtung dazu geeignet und bestimmt, zeitlich vor, während oder nach dem Greifen der Blasformeinrichtung die Kupplungseinrichtung zu trennen und/oder zu verbinden und/oder eine Strömungsverbindung zwischen dem Kanal und der Kupplungseinrichtung zu trennen und/oder herzustellen, bevorzugt allerdings immer noch während eines einzelnen Wechselvorgangs einer Blasformeinrichtung. Die vorliegende Erfindung ergänzt daher die Greifeinrichtung für die Blasformeinrichtungen, bevorzugt an einem Handhabungsmanipulator. Die Blasformeinrichtungen werden als Formenpaket, etwa die Bodenform und die zwei Schalenformen (also das Bodenteil und zwei Seitenteile) in der Greifeinrichtung aufgenommen.

An dieser Greifeinrichtung oder bevorzugt an dem Handhabungsmanipulator selbst befindet sich bevorzugt eine Einrichtung, die vor, während oder nach der Aufnahme der Blasformeinrichtungen im (Blas-)Formträger die Medienkupplungen bzw. die Kupplungseinrichtungen bedient bzw. abkuppelt. Somit muss der Bediener nicht einzeln nacheinander die Medienkupplungen bzw. die Kupplungseinrichtungen abkoppeln und die Rüstzeit verringert sich. Das Ankoppeln der Medienkupplungen bzw. der Kupplungseinrichtungen wird bevorzugt jedoch wieder von dem Bediener erledigt. Bevorzugt sind die einzelnen Schnittstellen der Wechseleinrichtung zum Bedienen einer Kupplungseinrichtung, d.h. zum Trennen oder Verbinden einer Kupplungseinrichtung, zumindest teilweise und bevorzugt vollständig auf oder an der Greifeinrichtung angeordnet.

In einer weiteren vorteilhaften Ausführungsform ist es möglich, dass die Wechseleinrichtung die Medienkupplungen bzw. die Kupplungseinrichtungen während oder nach dem Einsetzen der (neuen) Blasformeinrichtungen in den (Blas-)Formträger wieder ankuppelt.

In einer besonders bevorzugten ersten Variante ist die Vorrichtung bzw. die Wechseleinrichtung dazu geeignet und bestimmt, dass die Wechseleinrichtung, bei der es sich bevorzugt um einen Roboter handelt, bzw. dessen Greifeinrichtung sowohl den Wechselvorgang der Blasformeinrichtung vornimmt als auch wenigstens eine (bevorzugt wenigstens alle zur Vornahme des Wechselvorgangs zu trennenden) Kupplungseinrichtung(en) bzw. Medienkupplungen trennt und/oder verbindet. Mit anderen Worten führt in einer ersten Möglichkeit der Roboter sowohl den Blasformwechsel als auch das Kuppeln durch. Bevorzugt ist die Wechseleinrichtung dazu geeignet und bestimmt, den Blasformwechsel vollautomatisch durchzuführen.

In einer bevorzugten zweiten Variante ist die Vorrichtung dazu geeignet und bestimmt, auf ein Aktivierungssignal hin, welches bevorzugt der Vorrichtung von einem Bediener etwa über Betätigung eines Schaltelementes und/oder von einer Steuerungseinrichtung übermittelt werden kann, einen Wechselmodus zu aktivieren, der sich von dem Betriebsmodus der Vorrichtung unterscheidet. Beispielsweise kann im Vergleich zu dem Betriebsmodus die Transporteinrichtung mit reduzierter Transportgeschwindigkeit betrieben werden und/oder einzelne Einrichtung wie eine Zuführeinrichtung, die den Blasstationen Kunststoffvorformlinge zuführt nicht betrieben werden. Bevorzugt wird auf das Aktivierungssignal hin eine automatische Abkuppelsequenz aktiviert, welches bevorzugt einen Schritt enthält, in dem über ein bevorzugt feststehendes, insbesondere von außen bzw. außerhalb eines Gehäuses der Vorrichtung, Schaltelement wenigstens eine Kupplungseinrichtung und bevorzugt alle zu trennenden Kupplungseinrichtungen bevorzugt zumindest zeitweise gleichzeitig oder zeitlich nacheinander aktiviert bzw. getrennt werden. Die automatische Abkuppelsequenz enthält bevorzugt ferner den Schritt, in dem ein vollautomatischer Wechsel wenigstens einer Blasformeinrichtung und bevorzugt aller Blasformeinrichtungen durchgeführt wird. Die automatische Abkuppelsequenz enthält bevorzugt ferner den nachfolgenden Schritt, in dem über ein bevorzugt feststehendes, insbesondere von außen bzw. außerhalb eines Gehäuses der Vorrichtung, Schaltelement wenigstens eine Kupplungseinrichtung und bevorzugt alle zu verbindende Kupplungseinrichtungen bevorzugt zumindest zeitweise gleichzeitig oder zeitlich nacheinander aktiviert bzw. verbunden werden. Mit anderen Worten wird in dieser Variante vor dem eigentlichen Wechselvorgang mit dem Roboter eine automatische Abkuppelsequenz aktiviert, beispielsweise dreht sich das Blasrad langsam und über ein feststehendes von außen zustellbares Schaltelement werden alle Kupplungen bzw. eine Art Kassette aktiviert, auf die das Schaltelement einwirkt. Danach erfolgt bevorzugt ein vollautomatischer Wechsel. Das Ankuppeln erfolgt analog dem Abkuppelvorgang.

In einer bevorzugten dritten Variante handelt es sich bei der Wechseleinrichtung bevorzugt um einen Roboter. Bevorzugt ist bei dem Blasformwechsel eine Interaktion zwischen dem Bediener bzw. Operator und dem Roboter vorgesehen. Bevorzugt erfolgt in dieser dritten Variante ein Wechselvorgang der Blasformeinrichtung in im Wesentlichen drei Prozessschritten. In einem ersten Prozessschritt werden bevorzugt von einem Bediener bzw. Operator in einer halbautomatischen Blasradfahrt alle (zu trennenden) Anschlüsse bzw. Kupplungseinrichtungen abgekuppelt. In einem zweiten (nachfolgenden) Prozessschritt werden die Blasformeinrichtungen vollautomatisch (durch die Wechseleinrichtung) gewechselt. In einem dritten Prozessschritt werden bevorzugt von einem Bediener bzw. Operator, insbesondere in einer halbautomatischen Blasradfahrt, alle (zu verbindende) Kupplungseinrichtungen bzw. Anschlüsse wieder angekuppelt bzw. verbunden. Bei der halbautomatischen Blasradfahrt kann es sich bevorzugt um einen Betrieb der Umformungsvorrichtung in einem vorgegebenen Wechselmodus handeln, in dem beispielsweise das Blasrad bzw. die einzelnen Blasstationen/Umformungsstationen mit im Vergleich zu einem Betriebsmodus reduzierter Drehgeschwindigkeit rotiert werden.

In einer bevorzugten vierten Variante handelt es sich bei der Wechseleinrichtung um einen Handhabungsmanipulator. Bevorzugt erfolgt die Bedienung des Handhabungsmanipulators durch einen Operator bzw. Bediener, welcher bevorzugt ebenfalls die Medienabschlüsse bzw. die (bevorzugt wenigstens alle zur Vornahme des Wechselvorgangs zu trennenden) Kupplungseinrichtung(en) an- und/oder abkuppelt bzw. trennt und/oder verbindet.

In einer weiteren vorteilhaften Ausführungsform handelt es sich bei der bzw. bei wenigstens einer Kupplungseinrichtung und bevorzugt bei allen von der Wechseleinrichtung zu bedienenden Kupplungseinrichtungen um eine Steckverbindung.

In einer weiteren vorteilhaften Ausführungsform ist die bzw. wenigstens eine Kupplungseinrichtung und bevorzugt sind alle von der Wechseleinrichtung zu bedienenden Kupplungseinrichtungen selbstdichtend ausgestaltet. Dies bietet den Vorteil, dass beim Abkuppeln der Kupplungseinrichtung kein Medium tropft.

In einer weiteren vorteilhaften Ausführungsform handelt es sich bei der Kupplungseinrichtung und bevorzugt bei allen von der Wechseleinrichtung zu bedienenden Kupplungseinrichtungen um eine Schnellkupplung für Gase und/oder Fluide. Auch hierdurch kann eine Zeitersparnis bei einem Blasformwechsel erzielt werden.

In einer weiteren vorteilhaften Ausführungsform ist durch die Wechseleinrichtung eine Pneumatikverbindung zum Lösen einer Verriegelung einer Blasformeinrichtung herstellbar ist. Bei einem Blasformwechsel bzw. einem Wechsel der Blasformeinrichtungen, bevorzugt mittels Handhabungsmanipulator, werden die Blasformen bzw. die Blasformeinrichtungen im (Blas-)Formträger bevorzugt mit einer federvorgespannten Einheit verriegelt. Um die Blasformen bzw. die Blasformeinrichtungen zu entriegeln, muss diese Einheit mit Druckluft beaufschlagt werden. Bevorzugt erfolgt dies beim Blasformenwechsel mit Handhabungsmanipulator manuell. Bevorzugt wird mit einer Einrichtung an der Greifeinrichtung oder am Handhabungsmanipulator selbst (bzw. an der Wechseleinrichtung) an der Umformungsstation und bevorzugt an einem Blasformträger angedockt, beispielsweise über einen Konus und/oder eine konische Bohrung, bevorzugt in dem Blasformträger, und bevorzugt die Luftversorgung der Blasstation bevorzugt über eine Dichtung hergestellt. In einer weiteren vorteilhaften Ausprägung ist eine solche Einrichtung zur Ab- bzw. Ankopplung der Medienkupplungen bzw. der Kupplungseinrichtungen auch an einem Formwechselroboter denkbar.

In einer weiteren vorteilhaften Ausführungsform weist die Wechseleinrichtung Mittel zur Versorgung eines Kanals und/oder einer Kupplungseinrichtung mit fließfähigem Medium und insbesondere eine Quelle fließfähigen Mediums auf. Damit kann etwa eine Umformungsstation und insbesondere ein Blasformträger bzw. eine Verriegelung einer Blasformeinrichtung durch die Wechseleinrichtung mit Druckluft versorgt werden. Die Wechseleinrichtung kann aber auch lediglich eine Fluidverbindung zwischen einer Umformungsstation und einer stationären oder mobilen Medienversorgung herstellen, so dass letztlich bevorzugt etwa eine Verriegelung einer Blasformeinrichtung an einem Blasformträger durch Beaufschlagung mit Druckluft entriegelt werden kann.

In einer weiteren vorteilhaften Ausführungsform handelt es sich bei dem fließfähigen Medium bzw. bei dem Temperiermittel um fließfähiges Temperiermedium bzw. Temperiermittel bevorzugt zum Temperieren wenigstens eines Teils der Blasformeinrichtung. Bevorzugt handelt es sich bei dem Temperiermedium bzw. Temperiermittel um eine Flüssigkeit, wie beispielsweise Wasser oder Kühlwasser. Es kann sich aber auch um Warmwasser oder um beides handeln. Bevorzugt kann es sich bei dem Temperiermedium bzw. Temperiermittel auch um Öl handeln.

In einer weiteren vorteilhaften Ausführungsform ist die Vorrichtung in einem Reinraum angeordnet. Insbesondere kann die Herstellung bzw. Expansion (und das Befüllen der Behälter) der Behälter innerhalb eines Raums mit kontaminationsarmer Umgebung, bei der es sich insbesondere um einen Reinraum handelt, stattfinden. Vorteilhaft umgibt der Reinraum den Transportpfad der Behältnisse (zumindest abschnittsweise und bevorzugt zumindest in dem Bereich, in dem das Blasrad angeordnet ist) kanalartig. Weiterhin ist dieser Reinraum mittels wenigstens einer Wandung gegenüber einer unsterilen Umgebung abgegrenzt. Vorteilhaft kann die Wechseleinrichtung ebenfalls innerhalb des Reinraumes angeordnet sein, besonders bevorzugt nicht nur in einem Wechselbetriebsmodus sondern auch in einem Expansionsbetriebsmodus der Vorrichtung.

Die vorliegende Erfindung ist weiterhin gerichtet auf ein Verfahren zum Betreiben einer Vorrichtung zum Umformen von Kunststoffvorformlingen zu Kunststoffbehältnissen mit einer Transporteinrichtung, welche die Kunststoffvorformlinge entlang eines vorgegebenen Transportpfads transportiert, wobei die Transporteinrichtung einen beweglichen und zumindest mittelbar an einem stationären Basisträger angeordneten Stationsträger aufweist, an dem eine Vielzahl von Umformungsstationen angeordnet ist, wobei diese Umformungsstationen jeweils Blasformeinrichtungen aufweisen, welche jeweils Hohlräume bzw. jeweils einen Hohlraum ausbilden, innerhalb derer bzw. innerhalb dem die Kunststoffvorformlinge zu den Kunststoffbehältnissen umformbar sind und diese Blasformeinrichtungen jeweils an Blasformträgern angeordnet sind, wobei die Vorrichtung eine Wechseleinrichtung aufweist, welche geeignet und dazu bestimmt ist, zumindest die Blasformeinrichtungen von deren Blasformträgern zu entfernen und/oder Blasformeinrichtungen an den Blasformträgern anzuordnen, wobei diese Wechseleinrichtung mindestens eine Greifeinrichtung zum Greifen der Blasformeinrichtung aufweist, wobei die Greifeinrichtung geeignet dazu ist, wahlweise eine vollständige Blasformeinrichtung oder nur Teile der Blasformeinrichtung zu wechseln, wobei die Umformungsstation und insbesondere die Blasformeinrichtung wenigstens einen Kanal zum Führen eines fließfähigen Mediums sowie wenigstens eine von dem Kanal trennbare Kupplungseinrichtung aufweist.

Erfindungsgemäß trennt und/oder verbindet die Wechseleinrichtung die Kupplungseinrichtung und/oder trennt eine Strömungsverbindung zwischen dem Kanal und der Kupplungseinrichtung und/oder stellt eine Strömungsverbindung zwischen dem Kanal und der Kupplungseinrichtung her. Bevorzugt erfolgt das Trennen und/oder Verbinden der Kupplungseinrichtungen in einem Wechselbetriebsmodus der Vorrichtung, der sich von einem Betriebsmodus unterscheidet. Bevorzugt löst die Wechseleinrichtung wenigstens eine Kupplungseinrichtung und bevorzugt alle die bei einem Blasformwechsel zu bedienenden Kupplungseinrichtungen selbstständig bzw. automatisch und damit bevorzugt ohne Einwirkung eines Bedieners. Dabei kann das Verfahren bevorzugt mit allen im Zusammenhang der Vorrichtung beschriebenen Merkmalen einzeln oder in Kombination mit mehreren dieser Merkmale ausgestattet sein (auch umgekehrt).

Es wird also auch im Rahmen des erfindungsgemäßen Verfahrens vorgeschlagen, dass die Wechseleinrichtung nicht nur eine Blasformeinrichtung aufnehmen oder einsetzen kann, sondern auch zeitgleich oder zeitlich versetzt hierzu eine Strömungsverbindung trennen und/oder herstellen kann, bevorzugt zwischen einer Blasformeinrichtung und einem weiteren Element der Vorrichtung. Bevorzugt trennt und/oder verbindet die Wechseleinrichtung Kupplungseinrichtungen, die im Betriebszustand der Vorrichtung auf verschiedenen Höhenebenen angeordnet sind. Bevorzugt trennt und/oder verbindet die Wechseleinrichtung Kupplungseinrichtungen, von denen bevorzugt eine an einem Bodenteil der Blasformeinrichtung und wenigstens eine an einem Seitenteil der Blasformeinrichtung angeordnet ist. Bevorzugt kann eine Trennung bzw. eine Verbindung wenigstens einer Kupplungseinrichtung ausgelöst werden durch eine Greifbewegung der Greifeinrichtung oder aber mit dieser (zeitlich) korreliert sein.

In einer vorteilhaften Ausführungsform löst und/oder verbindet die Wechseleinrichtung wenigstens zwei Kupplungseinrichtungen zeitlich nacheinander. Dies bietet den Vorteil, dass die Wechseleinrichtung mit ein und derselben Schnittstelle etwa verschiedene Kupplungseinrichtung lösen und/oder verbinden kann.

In einer weiteren vorteilhaften Ausführungsform nimmt die Wechseleinrichtung lediglich eine Trennung wenigstens einer Kupplungseinrichtung und/oder wenigstens einer Strömungsverbindung zwischen dem Kanal und der Kupplungseinrichtung vor, während eine Verbindung der Kupplungseinrichtung und/oder Herstellung einer Strömungsverbindung zwischen dem Kanal und der Kupplungseinrichtung manuell erfolgt.

Weitere Vorteile und Ausführungsformen ergeben sich aus den beigefügten Zeichnungen: Darin zeigen:
- Fig. 1: eine schematische Darstellung einer erfindungsgemäßen Vorrichtung;
- Fig. 2: eine perspektivische Ansicht einer weiteren Ausführungsform der Erfindung;
- Fig. 3: eine Darstellung eines Benutzers mit einer Blasformeinrichtung;
- Fig. 4: eine Darstellung eines Benutzers mit einer Halteeinrichtung;
- Fig. 5: eine Darstellung einer Kupplungseinrichtung in getrenntem Zustand; und
- Fig. 6: eine Darstellung der Kupplungseinrichtung aus Fig. 5 in verbundenem Zustand.

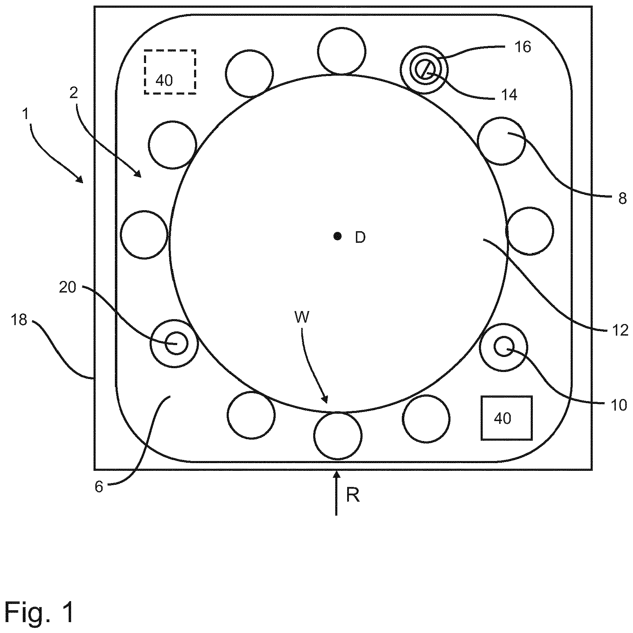

Fig. 1 zeigt eine schematische Darstellung einer Vorrichtung 1 zum Umformen von Kunststoffvorformlingen 10 zu Kunststoffbehältnissen 20. Dabei werden die Kunststoffvorformlinge 10 den einzelnen Umformungsstationen 8 zugeführt und, bevorzugt während sie von einer Transporteinrichtung 2 transportiert werden, zu Kunststoffbehältnissen 20 expandiert. Nach dieser Expansion werden die Kunststoffbehältnisse 20 wieder von der Vorrichtung 1 entnommen. Zu diesem Zwecke kann ein Zuführstern vorgesehen sein, der die Kunststoffvorformlinge der Vorrichtung 1 zuführt, sowie eine Abführeinrichtung, insbesondere ebenfalls ein Transportstern, der die fertiggestellten Behältnisse 20 von der Vorrichtung abführt. Die Vorrichtung 1 weist einen Stationsträger 12 auf, an dem eine Vielzahl von Umformungsstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figu-renebene und damit vertikal verläuft) drehbar ist. Jede einzelne Umformungsstation weist dabei jeweils eine Blasformeinrichtung 14 auf. Diese Blasformeinrichtung 14 setzt sich aus zwei Seitenteilen und einem Bodenteil zusammen. Diese Blasformeinrichtungen können gemäß der Erfindung ausgewechselt werden. Die Blasformeinrichtungen 14 sind dabei an Blasformträgern 16 angeordnet und können von diesen entnommen bzw. an diesen angeordnet werden.

Das Bezugszeichen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist bevorzugt auch die Wechseleinrichtung 40 angeordnet. Damit kann die Wechseleinrichtung 40 in die Vorrichtung integriert werden. Das Bezugszeichen 18 kennzeichnet ein Gehäuse, welches zumindest teilweise den Stationsträger 12 umgibt, welches jedoch bevorzugt auch die Wechseleinrichtung 40 einschließen bzw. einhausen kann. Bevorzugt trennt das Gehäuse seinen Innenraum, der als Steril- bzw. Reinraum ausgebildet ist, von einer normalen Atmosphäre ab. Bevorzugt ist die Wechseleinrichtung 40 aber auch zumindest zeitweise und besonders bevorzugt dauerhaft und vorteilhaft auch während seiner Vornahme eines Wechselvorgangs außerhalb des Gehäuses 18 bzw. vor oder in der Peripherie der Blasmaschine bzw. der Umformungsvorrichtung 1 angeordnet. In diesem Falle ist die Vorrichtung 1 sowie die Wechseleinrichtung 40 bevorzugt dazu geeignet und bestimmt, von außerhalb des Gehäuses 18 in die Blasmaschine bzw. die Umformungsvorrichtung 1, bevorzugt durch das Gehäuse 18 hindurch, einzugreifen.

Das Bezugszeichen W kennzeichnet eine Wechselposition. Die Blasformeinrichtungen können bevorzugt an einer bestimmten Wechselposition eingewechselt werden. Dies bedeutet, dass die Umformungsstationen durch eine Drehung des Trägers 12 sukzessive in diese Wechselposition W gefahren werden können und in dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Umformungsstationen bzw. die Blasformeinrichtungen zugestellt, um diese zu wechseln.

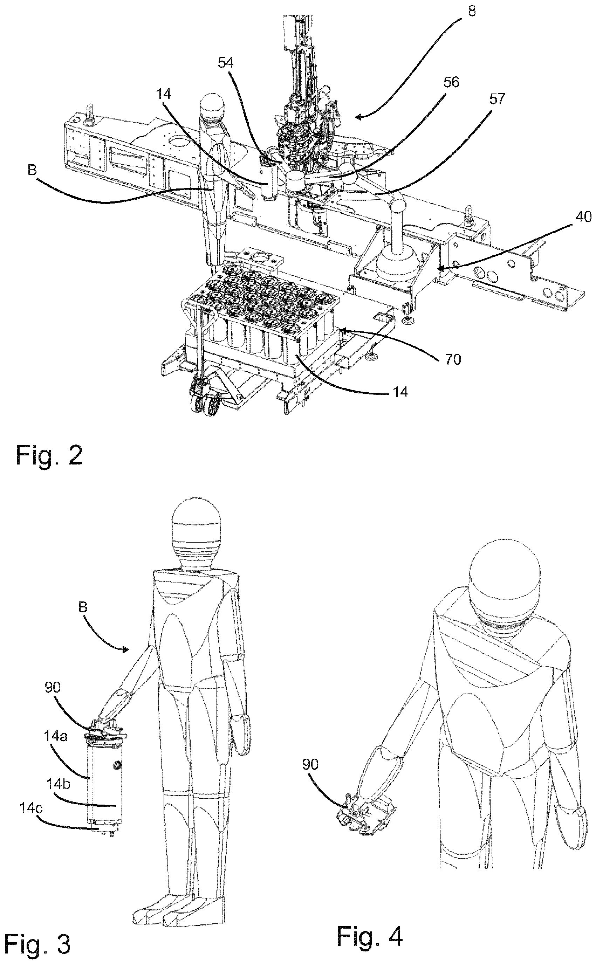

Fig. 2 zeigt eine perspektivische Ansicht einer weiteren Ausführungsform der Erfindung. Bei dieser Ausführungsform ist die Wechseleinrichtung 40 als sogenannter Manipulator ausgestaltet, welcher von einem Benutzer B bedient werden kann. Dieser Manipulator 40 weist eine Greifeinrichtung auf, welche zum Halten der Blasformeinrichtung 14 dient. Diese Greifeinrichtung ist an einem Arm 54 angeordnet und dieser Arm wiederum an einem Arm 56. Das Bezugszeichen 57 kennzeichnet einen weiteren Arm, an dem der Arm 56 angeordnet ist.

Der Benutzer B kann zum Wechseln der Blasformeinrichtungen die Greifeinrichtung an die Umformungseinrichtung 8 heranführen und mit der Blasformeinrichtung verbinden. Des Weiteren kann der Benutzer B mittels der Wechseleinrichtung 40 eine Verriegelung der Blasformeinrichtung, beispielsweise an dem Blasformträger 14 durch Beaufschlagen mit Druckluft, welche etwa von der Wechseleinrichtung 40 bereitgestellt wird, lösen. Im Anschluss daran kann die Blasformeinrichtung von der Wechseleinrichtung 40 aufgenommen werden. Anschließend kann der Benutzer B die Blasformeinrichtung 14 mittels der Wechseleinrichtung 40 zu einem Magazin bewegen und dort ablegen.

Fig. 3 zeigt eine Darstellung eines Benutzers, der eine Blasformeinrichtung 14 trägt. Denkbar wäre allerdings auch, dass dieser vollständig durch einen Roboter beim Blasformwechsel ersetzt wird. Dabei kennzeichnen die Bezugszeichen 14a, 14b und 14c die einzelnen Bestandteile der Blasformeinrichtung, nämlich deren Seitenteile sowie das Bodenteil 14c. Das Bezugszeichen 90 kennzeichnet eine Halteeinrichtung, welche zum Halten der Blasformeinrichtung 14 dient. Diese Halteeinrichtung 90 kann dabei derart gestaltet sein, dass sie einerseits mit einer Wechseleinrichtung 40 verbindbar ist, andererseits jedoch auch von dem Benutzer B gehalten werden kann.

Fig. 4 zeigt einen Benutzer B, der lediglich die Halteeinrichtung 90 hält. Wie zu sehen ist, kann diese so ausgestaltet sein, dass diese bevorzugt auf einer Seite von dem Benutzer B gehalten werden kann.

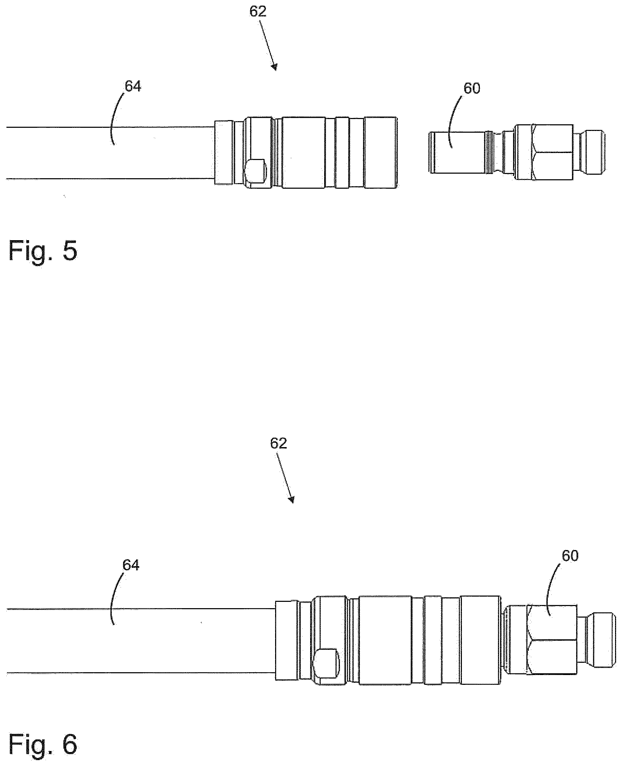

Die Figuren 5 und 6 zeigen schließlich eine Kupplungseinrichtung 62, mithilfe derer eine Strömungsverbindung zwischen einem ersten Kanal 60 und einem zweiten Kanal 64 herstellbar oder trennbar ist. Eine solche Trennung oder Herstellung einer Strömungsverbindung zwischen zwei Kanälen kann etwa die Wechseleinrichtung 40 ausführen. Fig. 5 zeigt dabei die Kupplungseinrichtung 62 in getrenntem Zustand, in dem also keine Strömungsverbindung zwischen dem Kanal 60 und dem zweiten Kanal 64 besteht. Dahingegen ist die Kupplungseinrichtung 62 in Fig. 6 in verbundenem Zustand gezeigt, in dem eine Strömungsverbindung zwischen dem Kanal 60 und dem zweiten Kanal 64 hergestellt ist. In verbundenem Zustand der Kupplungseinrichtung 62 kann bevorzugt ein fließfähiges Medium dem Kanal 60 zugeführt oder von dort abgeführt und hierdurch ein Teil einer Blasformeinrichtung 14 oder des Blasformträgers 16 temperiert werden.

### Bezugszeichenliste

- 1: Vorrichtung
- 2: Transporteinrichtung
- 6: Basisträger
- 8: Umformungsstation
- 10: Kunststoffvorformling
- 12: Stationsträger
- 14: Blasformeinrichtung
- 14a, b, c: Bestandteile der Blasformeinrichtung
- 16: Blasformträger
- 20: Kunststoffbehältnis
- 40: Wechseleinrichtung
- 54, 56, 57: Arm
- 60: Kanal
- 62: Kupplungseinrichtung
- 64: zweiter Kanal
- 90: Halteeinrichtung
- B: Benutzer
- D: Drehachse
- R: radiale Richtung
- W: Wechselposition

## Patentansprüche

1. Vorrichtung (1) zum Umformen von Kunststoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen (20) umformbar sind und diese Blasformeinrichtungen (14) jeweils an Blasformträgern (16) angeordnet sind, wobei die Vorrichtung (1) eine Wechseleinrichtung (40) aufweist, welche geeignet und dazu bestimmt ist, zumindest die Blasformeinrichtungen (14) von deren Blasformträgern (16) zu entfernen und/oder Blasformeinrichtungen (14) an den Blasformträgern (16) anzuordnen, wobei diese Wechseleinrichtung (40) mindestens eine Greifeinrichtung zum Greifen der Blasformeinrichtung (14) aufweist, wobei die Greifeinrichtung geeignet dazu ist, wahlweise eine vollständige Blasformeinrichtung (14) oder nur Teile (14a, 14b, 14c) der Blasformeinrichtung (14) zu wechseln, wobei die Umformungsstation (8) und insbesondere die Blasformeinrichtung (14) wenigstens einen Kanal (60) zum Führen eines fließfähigen Mediums sowie wenigstens eine von dem Kanal (60) trennbare Kupplungseinrichtung (62) aufweist,
**dadurch gekennzeichnet, dass**
die Wechseleinrichtung (40) dazu geeignet und bestimmt ist, die Kupplungseinrichtung (62) zu trennen und/oder zu verbinden und/oder eine Strömungsverbindung zwischen dem Kanal (60) und der Kupplungseinrichtung (62) zu trennen und/oder herzustellen, wobei sich an der Wechseleinrichtung eine Einrichtung befindet, welche die Kopplungseinrichtungen beim Greifen der Form automatisch löst und/oder verbindet.

2. Vorrichtung (1) nach Anspruch 1,
**dadurch gekennzeichnet, dass**
die Wechseleinrichtung (40) ein Wechselroboter oder ein Handhabungsmanipulator ist und der Wechselvorgang automatisch oder halbautomatisch erfolgt.

3. Vorrichtung (1) nach wenigstens einem der vorhergehenden Ansprüche,
**dadurch gekennzeichnet, dass**
die Umformungsstation (8) wenigstens zwei und bevorzugt eine Vielzahl von Kupplungseinrichtungen (62) aufweist und/oder die Wechseleinrichtung (40) wenigstens zwei und bevorzugt eine Vielzahl von Schnittstellen zur Trennung und/oder Herstellung einer Strömungsverbindung aufweist.

4. Vorrichtung (1) nach wenigstens einem der vorangegangen Ansprüche,
**dadurch gekennzeichnet, dass**
die Umformungsstation (8) wenigstens zwei Kupplungseinrichtungen (62) aufweist, die auf im Wesentlichen voneinander verschiedenen Höhenebenen angeordnet sind.

5. Vorrichtung (1) nach wenigstens einem der vorangegangen Ansprüche,
**dadurch gekennzeichnet, dass**
die Umformungsstation (8) wenigstens zwei Kupplungseinrichtungen (62) aufweist, und die Wechseleinrichtung (40) dazu geeignet und bestimmt ist, die beiden Kupplungseinrichtungen (62) zeitlich nacheinander zu lösen und/oder zu verbinden.

6. Vorrichtung (1) nach wenigstens einem der vorangegangen Ansprüche,
**dadurch gekennzeichnet, dass**
die Wechseleinrichtung (40) dazu geeignet und bestimmt ist, zeitlich vor, während oder nach dem Greifen der Blasformeinrichtung (14) die Kupplungseinrichtung (62) zu trennen und/oder zu verbinden und/oder eine Strömungsverbindung zwischen dem Kanal (60) und der Kupplungseinrichtung (62) zu trennen und/oder herzustellen.

7. Vorrichtung (1) nach wenigstens einem der vorangegangen Ansprüche,
**dadurch gekennzeichnet, dass**
es sich bei der Kupplungseinrichtung (62) um eine Steckverbindung handelt und/oder es sich bei der Kupplungseinrichtung (62) um eine Schnellkupplung für Gase und/oder Fluide handelt.

8. Vorrichtung (1) nach wenigstens einem der vorangegangen Ansprüche,
**dadurch gekennzeichnet, dass**
die Kupplungseinrichtung (62) selbstdichtend ausgestaltet ist.

9. Vorrichtung (1) wenigstens einem der vorangegangenen Ansprüche,
**dadurch gekennzeichnet, dass**
durch die Wechseleinrichtung (40) eine Pneumatikverbindung zum Lösen einer Verriegelung der Blasformeinrichtung (14) herstellbar ist.

10. Vorrichtung (1) nach wenigstens einem der vorangegangenen Ansprüche,
**dadurch gekennzeichnet, dass**
die Wechseleinrichtung (40) Mittel zur Versorgung eines Kanals (60) und/oder einer Kupplungseinrichtung (62) mit fließfähigem Medium und insbesondere eine Quelle fließfähigen Mediums aufweist.

11. Vorrichtung (1) nach wenigstens einem der vorangegangenen Ansprüche,
**dadurch gekennzeichnet, dass**
es sich bei dem fließfähigen Medium um fließfähiges Temperiermedium bevorzugt zum Temperieren wenigstens eines Teils (14a, 14b, 14c) der Blasformeinrichtung (14) handelt.

12. Vorrichtung (1) nach wenigstens einem der vorangegangenen Ansprüche,
**dadurch gekennzeichnet, dass**
die Umformungsvorrichtung (1) in einem Reinraum angeordnet ist.

13. Verfahren zum Betreiben einer Vorrichtung (1) zum Umformen von Kunststoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen (20) umformbar sind und diese Blasformeinrichtungen (14) jeweils an Blasformträgern (16) angeordnet sind, wobei die Vorrichtung (1) eine Wechseleinrichtung (40) aufweist, welche geeignet und dazu bestimmt ist, zumindest die Blasformeinrichtungen (14) von deren Blasformträgern (16) zu entfernen und/oder Blasformeinrichtungen (14) an den Blasformträgern (16) anzuordnen, wobei diese Wechseleinrichtung (40) mindestens eine Greifeinrichtung zum Greifen der Blasformeinrichtung (14) aufweist, wobei die Greifeinrichtung geeignet dazu ist, wahlweise eine vollständige Blasformeinrichtung (14) oder nur Teile (14a, 14b, 14c) der Blasformeinrichtung (14) zu wechseln, wobei die Umformungsstation (8) und insbesondere die Blasformeinrichtung (14) wenigstens einen Kanal (60) zum Führen eines fließfähigen Mediums sowie wenigstens eine von dem Kanal (60) trennbare Kupplungseinrichtung (62) aufweist,
**dadurch gekennzeichnet, dass**
die Wechseleinrichtung (40) die Kupplungseinrichtung (62) trennt und/oder verbindet und/oder eine Strömungsverbindung zwischen dem Kanal (60) und der Kupplungseinrichtung (62) trennt und/oder herstellt, wobei sich an der Wechseleinrichtung eine Einrichtung befindet, welche die Kopplungseinrichtungen beim Greifen der Form automatisch löst und/oder verbindet.

14. Verfahren nach Anspruch 13,
**dadurch gekennzeichnet, dass**
die Wechseleinrichtung (40) wenigstens zwei Kupplungseinrichtungen (62) zeitlich nacheinander löst und/oder verbindet.

15. Verfahren nach wenigstens einem der beiden vorhergehenden Ansprüche,
**dadurch gekennzeichnet, dass**
die Wechseleinrichtung (40) lediglich eine Trennung einer Kupplungseinrichtung (62) und/oder einer Strömungsverbindung zwischen dem Kanal (60) und der Kupplungseinrichtung (62) vornimmt, während eine Verbindung der Kupplungseinrichtung (62) und/oder Herstellung einer Strömungsverbindung zwischen dem Kanal (60) und der Kupplungseinrichtung (62) manuell erfolgt.

## Claims

1. Apparatus (1) for transforming plastic parisons (10) to plastic containers (20) with a transport device (2) which transports the plastic parisons (10) along a predetermined transport path, wherein the transport device (2) has a movable station support (12) arranged at least indirectly on a stationary base support (6) on which a plurality of transforming stations (8) is arranged, wherein these transforming stations (8) each have blow mould devices (14) which each form cavities within which the plastic parisons (10) can be transformed into the plastic containers (20) and these blow mould devices (14) are each disposed on blow mould supports (16), wherein the apparatus (1) has a changing device (40) which is suitable and intended at least to remove the blow moulding devices (14) from their blow mould supports (16) and/or to arrange blow moulding devices (14) on the blow mould supports (16), wherein this changing device (40) has at least one gripping device for gripping the blow moulding device (14), wherein the gripping device is suitable for selectively changing a complete blow moulding device (14) or only parts (14a, 14b, 14c) of the blow moulding device (14), wherein the reshaping station (8) and in particular the blow moulding device (14) has at least one channel (60) for conveying a flowable medium as well as at least one coupling device (62) which can be separated from the channel (60),
**characterised in that**
the changing device (40) is suitable and intended to separate and/or to connect the coupling device (62) and/or to break and/or to make a flow connection between the channel (60) and the coupling device (62), wherein a device which is located on the changing device which automatically releases and/or connects the coupling device during gripping of the mould.

2. Apparatus (1) according to claim 1,
**characterised in that**
the changing device (40) is a changing robot or a handling manipulator and the changing operation takes place automatically or semiautomatically.

3. Apparatus (1) according to at least one of the preceding claims,
**characterised in that**
the reshaping station (8) has at least two and preferably a plurality of coupling devices (62) and/or the changing device (40) has at least two and preferably a plurality of interfaces for breaking and/or making a flow connection.

4. Apparatus (1) according to at least one of the preceding claims,
**characterised in that**
the reshaping device (8) has at least two coupling devices (62) which are arranged at height levels which are substantially different from one another.

5. Apparatus (1) according to at least one of the preceding claims,
**characterised in that**
the reshaping device (8) has at least two coupling devices (62) and the changing device (40) is suitable and intended to separate and/or to connect the two coupling devices (62) successively.

6. Apparatus (1) according to at least one of the preceding claims,
**characterised in that**
the changing device (40) is suitable and intended to separate and/or to connect the coupling device (62) and/or to break and/or to make a flow connection between the channel (60) and the coupling device (62) before, during or after the gripping of the blow moulding device (14).

7. Apparatus (1) according to at least one of the preceding claims,
**characterised in that**
the coupling device (62) is a plug connection and/or the coupling device (62) is a quick-release coupling for gases and/or fluids.

8. Apparatus (1) according to at least one of the preceding claims,
**characterised in that**
the coupling device (62) is designed to be self-sealing.

9. Apparatus (1) according to at least one of the preceding claims,
**characterised in that**
a pneumatic connection for releasing a latching of a blow moulding device (14) can be produced by the changing device (40).

10. Apparatus (1) according to at least one of the preceding claims,
**characterised in that**
the changing device (40) has means for supplying a channel (60) and/or a coupling device (62) with flowable medium and in particular a source of flowable medium.

11. Apparatus (1) according to at least one of the preceding claims,
**characterised in that**
the flowable medium is a temperature control medium preferably for temperature control of at least a part (14a, 14b, 14c) of the blow moulding device (14).

12. Apparatus (1) according to at least one of the preceding claims,
**characterised in that**
the reshaping device (1) is arranged in a clean room.

13. Method for operating an apparatus (1) for reshaping plastic preforms (10) into plastic containers (20) with a transport device (2) which transports the plastic preforms (10) along a predetermined transport path, wherein the transport device (2) has a movable station support (12) arranged at least indirectly on a stationary base support (6) on which a plurality of transforming stations (8) is arranged, wherein these transforming stations (8) each have blow mould devices (14) which each form cavities within which the plastic parisons (10) can be transformed into the plastic containers (20) and these blow mould devices (14) are each disposed on blow mould supports (16), wherein the apparatus (1) has a changing device (40) which is suitable and intended at least to remove the blow moulding devices (14) from their blow mould supports (16) and/or to arrange blow moulding devices (14) on the blow mould supports (16), wherein this changing device (40) has at least one gripping device for gripping the blow moulding device (14), wherein the gripping device is suitable for selectively changing a complete blow moulding device (14) or only parts (14a, 14b, 14c) of the blow moulding device (14), wherein the reshaping station (8) and in particular the blow moulding device (14) has at least one channel (60) for conveying a flowable medium as well as at least one coupling device (62) which can be separated from the channel (60),
**characterised in that**
the changing device (40) separates and/or connects the coupling device (62) and/or breaks or makes a flow connection between the channel (60) and the coupling device (62), wherein a device which is located on the changing device which automatically releases and/or connects the coupling device during gripping of the mould.

14. Method according to claim 13,
**characterised in that**
the changing device (40) separates and/or connects at least two coupling devices (62) successively.

15. Method according to at least one of the two preceding claims,
**characterised in that**
the changing device (40) merely performs a separation of a coupling device (62) and/or a flow connection between the channel (60) and the coupling device (62), whilst a connection of the coupling device (62) and/or production of a flow connection between the channel (60) and the coupling device (62) takes place manually.

## Revendications

1. Dispositif (1) pour façonner des préformes en plastique (10) en récipients en plastique (20) avec un système de transport (2), lequel transporte les préformes en plastique (10) le long d'une voie de transport prédéfinie, dans lequel le système de transport (2) présente un support de station (12) mobile et disposé au moins indirectement sur un support de base (6) fixe, sur lequel une pluralité de stations de façonnage (8) est disposée, dans lequel ces stations de façonnage (8) présentent respectivement des systèmes de moulage par soufflage (14), lesquels réalisent respectivement des cavités, à l'intérieur desquelles les préformes en plastique (10) peuvent être façonnées en récipients en plastique (20) et ces systèmes de moulage par soufflage (14) sont disposés respectivement sur des supports de moule de soufflage (16), dans lequel le dispositif (1) présente un système de remplacement (40), lequel est adapté et destiné à enlever au moins les systèmes de moulage par soufflage (14) de leurs supports de moule de soufflage (16) et/ou à disposer des systèmes de moulage par soufflage (14) sur les supports de moule de soufflage (16), dans lequel ce système de remplacement (40) présente au moins un système de préhension pour saisir le système de moulage par soufflage (14), dans lequel le système de préhension est adapté à remplacer sélectivement un système de moulage par soufflage (14) complet ou seulement des parties (14a, 14b, 14c) du système de moulage par soufflage (14), dans lequel la station de façonnage (8) et en particulier le système de moulage par soufflage (14) présente au moins un canal (60) pour guider un milieu coulant ainsi qu'au moins un système d'accouplement (62) pouvant être séparé du canal (60),
**caractérisé en ce que**
le système de remplacement (40) est adapté et destiné à séparer et/ou à relier le système d'accouplement (62) et/ou à rompre et/ou à établir une liaison d'écoulement entre le canal (60) et le système d'accouplement (62), dans lequel un système, lequel libère et/ou relie automatiquement les systèmes d'accouplement lors de la saisie du moule, se trouve sur le système de remplacement.

2. Dispositif (1) selon la revendication 1,
**caractérisé en ce que**
le système de remplacement (40) est un robot de remplacement ou un manipulateur de manipulation et le processus de remplacement s'effectue de manière automatique ou semi-automatique.

3. Dispositif (1) selon au moins l'une des revendications précédentes,
**caractérisé en ce que**
la station de façonnage (8) présente au moins deux et de préférence une pluralité de systèmes d'accouplement (62) et/ou le système de remplacement (40) présente au moins deux et de préférence une pluralité d'interfaces pour rompre et/ou établir une liaison d'écoulement.

4. Dispositif (1) selon au moins l'une des revendications précédentes,
**caractérisé en ce que**
la station de façonnage (8) présente au moins deux systèmes d'accouplement (62), qui sont disposés sur des plans de hauteur sensiblement différents les uns des autres.

5. Dispositif (1) selon au moins l'une des revendications précédentes,
**caractérisé en ce que**
la station de façonnage (8) présente au moins deux systèmes d'accouplement (62), et le système de remplacement (40) est adapté et destiné à détacher et/ou à relier les deux systèmes d'accouplement (62) successivement dans le temps.

6. Dispositif (1) selon au moins l'une des revendications précédentes,
**caractérisé en ce que**
le système de remplacement (40) est adapté et destiné à séparer et/ou à relier le système d'accouplement (62) dans le temps avant, pendant ou après la saisie du système de moulage par soufflage (14) et/ou à rompre et/ou à établir une liaison d'écoulement entre le canal (60) et le système d'accouplement (62).

7. Dispositif (1) selon au moins l'une des revendications précédentes,
**caractérisé en ce que**
il s'agit pour le système d'accouplement (62) d'une liaison par enfichage et/ou il s'agit pour le système d'accouplement (62) d'un accouplement rapide pour des gaz et/ou fluides.

8. Dispositif (1) selon au moins l'une des revendications précédentes,
**caractérisé en ce que**
le système d'accouplement (62) est conçu de manière auto-étanche.

9. Dispositif (1) au moins l'une des revendications précédentes,
**caractérisé en ce que**
une liaison pneumatique pour libérer un verrouillage du système de moulage par soufflage (14) peut être établie par le système de remplacement (40).

10. Dispositif (1) selon au moins l'une des revendications précédentes,
**caractérisé en ce que**
le système de remplacement (40) présente des moyens pour alimenter un canal (60) et/ou un système d'accouplement (62) en milieu coulant et en particulier une source de milieu coulant.

11. Dispositif (1) selon au moins l'une des revendications précédentes,
**caractérisé en ce que**
il s'agit pour le milieu coulant d'un milieu de thermorégulation coulant de préférence pour thermoréguler au moins une partie (14a, 14b, 14c) du système de moulage par soufflage (14).

12. Dispositif (1) selon au moins l'une des revendications précédentes,
**caractérisé en ce que**
le dispositif de façonnage (1) est disposé dans une salle blanche.

13. Procédé pour faire fonctionner un dispositif (1) pour façonner des préformes en plastique (10) en récipients en plastique (20) avec un système de transport (2), lequel transporte les préformes en plastique (10) le long d'une voie de transport prédéfinie, dans lequel le système de transport (2) présente un support de station (12) mobile et disposé au moins indirectement sur un support de base (6) fixe, sur lequel une pluralité de stations de façonnage (8) est disposée, dans lequel ces stations de façonnage (8) présentent respectivement des systèmes de moulage par soufflage (14), lesquels réalisent respectivement des cavités, à l'intérieur desquelles les préformes en plastique (10) peuvent être façonnées en récipients en plastique (20) et ces systèmes de moulage par soufflage (14) sont disposés respectivement sur des supports de moule de soufflage (16), dans lequel le dispositif (1) présente un système de remplacement (40), lequel est adapté et destiné à enlever au moins les systèmes de moulage par soufflage (14) de leurs supports de moule de soufflage (16) et/ou à disposer des systèmes de moulage par soufflage (14) sur les supports de moule de soufflage (16), dans lequel ce système de remplacement (40) présente au moins un système de préhension pour saisir le système de moulage par soufflage (14), dans lequel le système de préhension est adapté à remplacer sélectivement un système de moulage par soufflage (14) complet ou seulement des parties (14a, 14b, 14c) du système de moulage par soufflage (14), dans lequel la station de façonnage (8) et en particulier le système de moulage par soufflage (14) présente au moins un canal (60) pour guider un milieu coulant ainsi qu'au moins un système d'accouplement (62) pouvant être séparé du canal (60),
**caractérisé en ce que**
le système de remplacement (40) sépare et/ou relie le système d'accouplement (62) et/ou rompt et/ou établit une liaison d'écoulement entre le canal (60) et le système d'accouplement (62), dans lequel un système, lequel libère et/ou relie automatiquement les systèmes d'accouplement lors de la saisie du moule, se trouve sur le système de remplacement.

14. Procédé selon la revendication 13,
**caractérisé en ce que**
le système de remplacement (40) détache et/ou relie au moins deux systèmes d'accouplement (62) successivement dans le temps.

15. Procédé selon au moins l'une des deux revendications précédentes,
**caractérisé en ce que**
le système de remplacement (40) réalise uniquement une séparation d'un système d'accouplement (62) et/ou d'une liaison d'écoulement entre le canal (60) et le système d'accouplement (62), pendant qu'une liaison du système d'accouplement (62) et/ou un établissement d'une liaison d'écoulement entre le canal (60) et le système d'accouplement (62) s'effectue manuellement.
